(19) Europäisches Patentamt
European Patent Office
Office européen des brevets

(11) EP 4 435 022 A1

(12) **EUROPEAN PATENT APPLICATION**
published in accordance with Art. 153(4) EPC

(43) Date of publication:
**25.09.2024 Bulletin 2024/39**

(21) Application number: **23877746.0**

(22) Date of filing: **13.10.2023**

(51) International Patent Classification (IPC):
***C08F 255/02*** (2006.01) ***C08F 220/34*** (2006.01)
***C08F 210/06*** (2006.01) ***C08L 51/06*** (2006.01)

(52) Cooperative Patent Classification (CPC):
**C08F 210/06; C08F 220/34; C08F 255/02; C08L 51/06**

(86) International application number:
**PCT/KR2023/015818**

(87) International publication number:
**WO 2024/080823 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2022 KR 20220131742**
**12.10.2023 KR 20230135730**

(71) Applicant: **LG Chem, Ltd.**
**Yeongdeungpo-gu**
**Seoul 07336 (KR)**

(72) Inventors:
- **LEE, Miyeon**
  **Daejeon 34122 (KR)**
- **LEE, Jeong Yun**
  **Daejeon 34122 (KR)**
- **CHOI, Hyungsam**
  **Daejeon 34122 (KR)**
- **KIM, Sanggon**
  **Daejeon 34122 (KR)**
- **MOON, Hyeran**
  **Daejeon 34122 (KR)**
- **LEE, Hwanhee**
  **Daejeon 34122 (KR)**

(74) Representative: **Plasseraud IP**
**104 Rue de Richelieu**
**CS92104**
**75080 Paris Cedex 02 (FR)**

(54) **ANTIBACTERIAL RESIN, COMPOSITION FOR PREPARING SAME, AND MOLDED BODY COMPRISING SAME**

(57) The present invention relates to an antibacterial resin, a composition for forming an antibacterial resin, and a molded article including the antibacterial resin.

EP 4 435 022 A1

[Figure 1]

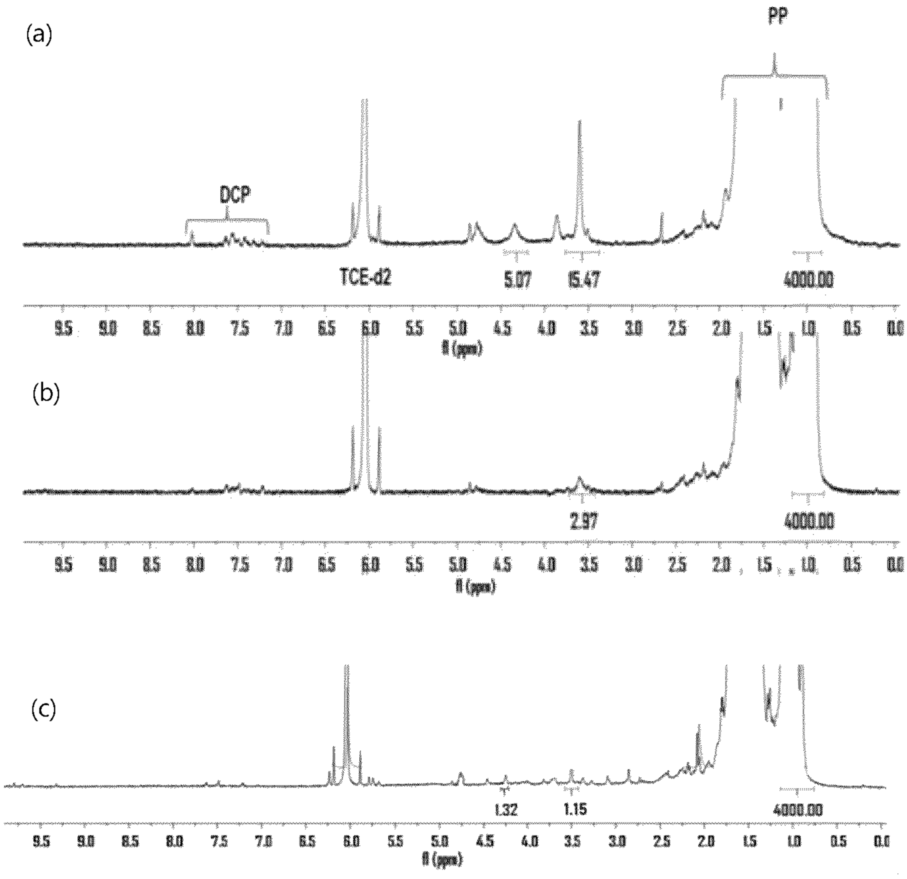
(a)
PP
DCP
TCE-d2
5.07
15.47
4000.00
fl (ppm)
(b)
2.97
4000.00
fl (ppm)
(c)
1.32
1.15
4000.00
fl (ppm)

## Description

[Technical Field]

The present specification relates to an antibacterial resin, a composition for forming an antibacterial resin, and a molded article including the antibacterial resin.

This application claims priority to and the benefit of Korean Patent Application Nos. 10-2022-0131742 and 10-2023-0135730 filed in the Korean Intellectual Property Office on October 13, 2022 and October 12, 2023, respectively, the entire contents of which are incorporated herein by reference.

[Background Art]

Recently, various products such as daily supplies or hygiene products are required to have high antibacterial properties.

The degree of antibacterial properties required and the material requirements for imparting antibacterial properties differ depending on the material of the product requiring antibacterial properties and the state of final use. For example, the properties of the material for imparting antibacterial properties and the degree of antibacterial properties vary depending on the amount of antibacterial material applied to a product used and the materials used together.

However, in introducing antibacterial agents and the like, which inhibit bacterial proliferation into resins, it has not been easy to select and introduce an antibacterial component that is harmless to the human body, satisfies economic feasibility, and does not degrade the basic physical properties of a polymer resin, while exhibiting excellent bacterial proliferation inhibiting properties.

Accordingly, there is a need for developing a highly antibacterial material that is suitable for application to each of various products, and does not release antibacterial materials, and thus is harmless to the human body.

[Citation List](Patent Document 1) Korean Patent Application Laid-Open No. 10-2009-0131847

[Detailed Description of the Invention]

[Technical Problem]

The present invention provides an antibacterial resin, a composition for forming an antibacterial resin, and a molded article including the same.

[Technical Solution]

An exemplary embodiment of the present specification provides an antibacterial resin including: a first repeating unit derived from propylene; and

a second repeating unit derived from a monomer represented by the following Chemical Formula 1,
in which a weight ratio of the first repeating unit to the second repeating unit is 1:0.005 or more.

[Chemical Formula 1]

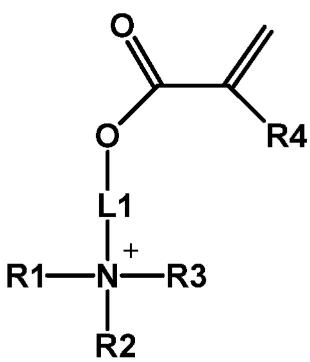

In Chemical Formula 1,

L1 is an alkylene group,
R1 to R3 are the same as or different from each other, and are each independently an alkyl group, and
R4 is hydrogen or an alkyl group.

Another exemplary embodiment of the present specification provides a composition for forming the above-described antibacterial resin.
Still another exemplary embodiment of the present specification provides a molded article including the above-described antibacterial resin or prepared therefrom.

[Advantageous Effects]

An antibacterial resin according to some exemplary embodiments of the present specification has hydrophilic and hydrophobic properties, and thus has excellent antibacterial properties.
The antibacterial resin according to some exemplary embodiments of the present specification can solve safety problems due to the release of antibacterial materials.
The antibacterial resin according to some exemplary embodiments of the present specification can exhibit antibacterial properties within a short period of time.
Since the antibacterial resin according to some exemplary embodiments of the present specification has little change in antibacterial activity depending on the amount of antibacterial material used, antibacterial properties can be exhibited within an expected range even when the unevenness of concentration occurs unintentionally during application to a product. Therefore, antibacterial properties are controlled within a specific range, so that excellent antibacterial properties can be safely imparted.
The antibacterial resin according to some exemplary embodiments of the present specification has low toxicity, and thus can solve safety problems.

[Brief Description of Drawings]

FIG. 1 is a set of views illustrating the NMR measurement results of antibacterial resins according to some exemplary embodiments of the present specification.

[Best Mode]

Hereinafter, the present invention will be described in detail.
An exemplary embodiment of the present specification provides an antibacterial resin including: a first repeating unit derived from propylene; and
a second repeating unit derived from a monomer represented by the following Chemical Formula 1, in which a weight ratio of the first repeating unit to the second repeating unit is 1:0.005 or more.

[Chemical Formula 1]

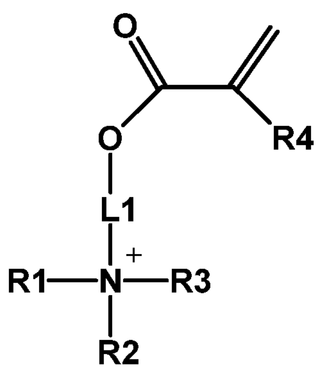

In Chemical Formula 1,

L1 is an alkylene group,
R1 to R3 are the same as or different from each other, and are each independently an alkyl group, and

R4 is hydrogen or an alkyl group.

In the related art, in order to impart antibacterial activity to materials, antibacterial agents were simply mixed with polymers, and in this case, inorganic antibacterial agents or organic antibacterial agents were used. The inorganic antibacterial agents are expensive, easily induce discoloration of materials, and may degrade the physical properties of polymers during processing processes such as extrusion or injection. Further, the inorganic antibacterial agents also have the disadvantage of low immediate antibacterial effects. The organic antibacterial agents themselves have a disadvantage in that antibacterial persistence deteriorates due to poor stability against the human body, poor thermal stability, and the like.

In contrast, since the antibacterial resin and antibacterial resin composition according to the present invention do not include an inorganic antibacterial agent, disadvantages such as discoloration and reduction in transparency can be overcome. In addition, since an antibacterial material is not included as a separate material but is polymerized as a monomer, it has an advantage in that stability against the human body is excellent and antibacterial persistence is maintained. When an organic antibacterial agent is applied to the polymerization of a polymer, the polymerization efficiency or conversion rate decreases or the inherent advantages of the polymer are impaired in many cases, but the present invention may also overcome these disadvantages. Due to the above advantages, the antibacterial resin of the present specification may exhibit excellent antibacterial persistence. That is, the antibacterial resin of the present specification may simultaneously improve stability due to the release of the antibacterial agent while having excellent antibacterial properties and antibacterial persistence.

Furthermore, the antibacterial resin according to the present invention is characterized in that the weight ratio of the first repeating unit to the second repeating unit is 1:0.005 or more, and when this range is satisfied, the antibacterial resin according to the present invention has an effect of exhibiting excellent antibacterial properties and antibacterial persistence.

According to an exemplary embodiment of the present specification, the weight ratio of the first repeating unit to the second repeating unit (first repeating unit: second repeating unit) may be 1:0.005 to 1:0.5, 1:0.005 to 1:0.3, or 1:0.005 to 1:0.1.

When one part "includes" one constituent element in the present specification, unless otherwise specifically described, this does not mean that another constituent element is excluded, but means that another constituent element may be further included.

In the present specification, the "derived" means that a new bond is generated while a bond between at least two adjacent elements in a compound is broken, or hydrogen or a substituent is detached, and a unit derived from the compound may mean a unit which forms one or more of a main chain and a side chain in a polymer. The unit may be included in a main chain in a polymer to constitute the polymer.

In the present specification, the "monomer" means a unit compound that may be converted into a polymer compound by a polymerization reaction, and structures derived therefrom may become a repeating unit in a polymer or copolymer. Specifically, this means that in a state in which the corresponding compound is polymerized and bonded in the polymer, in the structure of the compound, all or a portion of two or more substituents are omitted, and a radical for being bonded to other units of the polymer is located at the position. In this case, the corresponding compound may be included in a state of being polymerized in any order and bonded in the polymer.

In the present specification, the "weight average molecular weight" is one of the average molecular weights in which the molecular weight is not uniform and the molecular weight of any polymer material is used as a reference, and is a value obtained by averaging the molecular weight of a component molecular species of a polymer compound having a molecular weight distribution by a weight fraction.

In the present specification, among physical properties, physical properties which are affected by temperature are physical properties measured at room temperature, unless otherwise specified.

In the present specification, "room temperature" means the natural temperature that has not been heated or cooled, for example, any one temperature within a range of about 10°C to 30°C, for example, a temperature of about 15°C, about 18°C, meaning a temperature of about 20°C, about 23°C, or about 25°C. Further, in the present invention, the unit of temperature is °C, unless otherwise specified.

In the present specification, when pressure among physical properties affects the results, the corresponding physical property is a physical property measured at normal pressure, unless otherwise specified.

In the present specification, "normal pressure" is the natural pressure that has not been pressurized or depressurized, and refers to a pressure which is typically about 1 atmosphere (about 700 to 800 mmHg).

In the present specification, when humidity among physical properties affects the results, the corresponding physical property is a physical property measured at a humidity that is not particularly controlled in the room temperature and normal pressure state, unless otherwise specified.

In the present specification, an "alkyl group" may be straight-chained or branched, and the number of carbon atoms thereof is not particularly limited, but is preferably 1 to 60. According to an exemplary embodiment, the number

of carbon atoms of the alkyl group is 1 to 30. Specific examples of the alkyl group include a methyl group, an ethyl group, a propyl group, an isopropyl group, a butyl group, an isobutyl group, a tert-butyl group, a pentyl group, a hexyl group, a heptyl group, an octyl group, a nonyl group, a decyl group, an undecyl group, a dodecyl group, a tridecyl group, and the like, but are not limited thereto.

In the present specification, an "alkylene group" means a group having two bonding positions in an alkyl group, that is, a divalent group. The above-described description on the alkyl group may be applied to the alkylene group, except for a divalent alkylene group.

In the present specification, the "antibacterial resin" may mean a copolymer itself including a first unit derived from the propylene and a second unit derived from the monomer represented by Chemical Formula 1, and may also mean one in which additional components in addition to the polymer are further included.

In the present specification, * means an attachment point in the antibacterial resin. In this case, the attachment point may be a point where the same units are attached to each other, and may also be a point where a unit is attached to another unit. As an example, in the following Chemical Formula 1-1, * means both a part to which the second repeating units are attached and a part to which the first repeating unit and the second repeating unit are attached.

According to an exemplary embodiment of the present specification, the monomer represented by Chemical Formula 1 is an antibacterial material.

According to an exemplary embodiment of the present specification, the second repeating unit is represented by the following Chemical Formula 1-1.

[Chemical Formula 1-1]

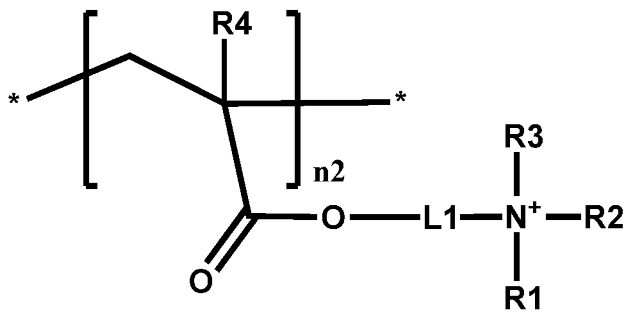

In Chemical Formula 1-1,

L1 is an alkylene group,
R1 to R3 are the same as or different from each other, and are each independently an alkyl group,
R4 is hydrogen or an alkyl group,
n2 is an integer from 1 to 50,000,
* is an attachment point in the antibacterial resin.

According to an exemplary embodiment of the present specification, n2 is an integer from 2 to 40,000, an integer from 5 to 30,000, or an integer from 10 to 10,000.

According to an exemplary embodiment of the present specification, R4 is hydrogen or an alkyl group having 1 to 10 carbon atoms.

According to an exemplary embodiment of the present specification, R4 is hydrogen or a methyl group.

According to an exemplary embodiment of the present specification, L1 is an alkylene group having 1 to 10 carbon atoms.

According to an exemplary embodiment of the present specification, L1 is an alkylene group having 1 to 5 carbon atoms.

According to an exemplary embodiment of the present specification, L1 is a methylene group; an ethylene group; a propylene group; or a butylene group.

According to an exemplary embodiment of the present specification, R1 to R3 are the same as or different from each other, and are each independently an alkyl group having 1 to 30 carbon atoms.

According to an exemplary embodiment of the present specification, any one of R1 to R3 is an alkyl group having 5 to 30 carbon atoms, and the others are the same as or different from each other, and are each independently an alkyl group having 1 to 30 carbon atoms.

According to an exemplary embodiment of the present specification, any one of R1 to R3 is an alkyl group

having 5 to 30 carbon atoms, and the others are the same as or different from each other, and are each independently an alkyl group having 1 to 20 carbon atoms.

According to an exemplary embodiment of the present specification, any one of R1 to R3 is an alkyl group having 5 to 30 carbon atoms, and the others are the same as or different from each other, and are each independently an alkyl group having 1 to 10 carbon atoms.

According to an exemplary embodiment of the present specification, any one of R1 to R3 is an alkyl group having 5 to 20 carbon atoms, and the others are the same as or different from each other, and are each independently an alkyl group having 1 to 30 carbon atoms.

According to an exemplary embodiment of the present specification, any one of R1 to R3 is an alkyl group having 5 to 20 carbon atoms, and the others are the same as or different from each other, and are each independently an alkyl group having 1 to 20 carbon atoms.

According to an exemplary embodiment of the present specification, any one of R1 to R3 is an alkyl group having 5 to 20 carbon atoms, and the others are the same as or different from each other, and are each independently an alkyl group having 1 to 10 carbon atoms.

According to an exemplary embodiment of the present specification, two or more of R1 to R3 are an alkyl group having 6 to 30 carbon atoms, or the difference in carbon number between an alkyl group having the largest number of carbon atoms and an alkyl group having the smallest number of carbon atoms among R1 to R3 is 5 or more.

Specifically, three of R1 to R3 are an alkyl group having 6 to 30 carbon atoms; two of R1 to R3 are an alkyl group having 6 to 30 carbon atoms, the other one is an alkyl group having 1 to 30 carbon atoms; or the difference in carbon number between an alkyl group having the largest number of carbon atoms and an alkyl group having the smallest number of carbon atoms among R1 to R3 is 5 or more, and in this case, an effect of excellent antibacterial activity is exhibited.

According to an exemplary embodiment of the present specification, a difference in the number of carbon atoms between the alkyl group having the largest number of carbon atoms and the alkyl group having the smallest number of carbon atoms of 5 or more means that the asymmetry is large, and the difference in the number of carbon atoms may be 5 to 30, or 5 to 10.

According to an exemplary embodiment of the present specification, the monomer represented by Chemical Formula 1 is any one of the following structures.

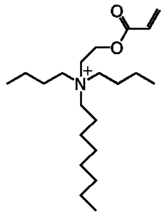
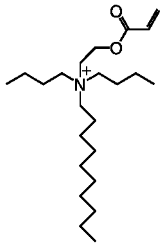
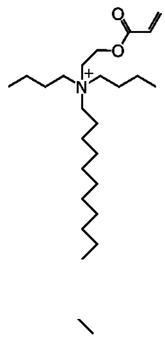
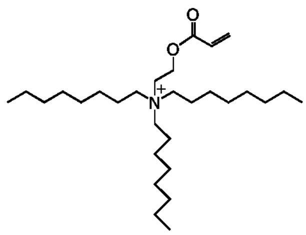

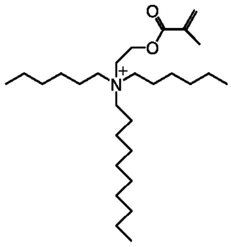
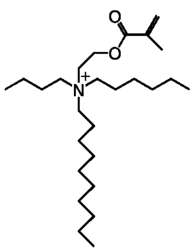
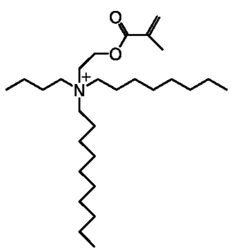
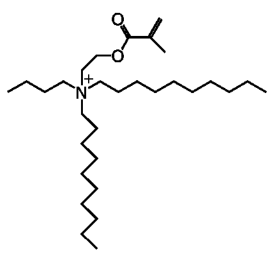

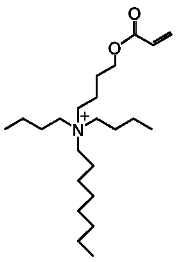 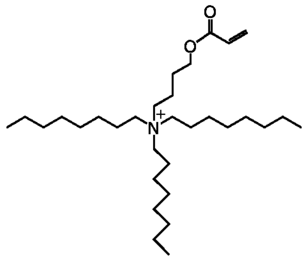 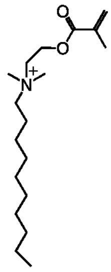 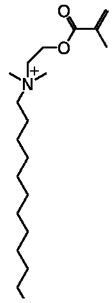

According to an exemplary embodiment of the present specification, the second repeating unit derived from the monomer represented by Chemical Formula 1 is any one of the following structures.

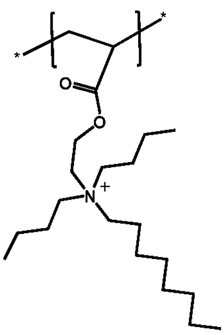 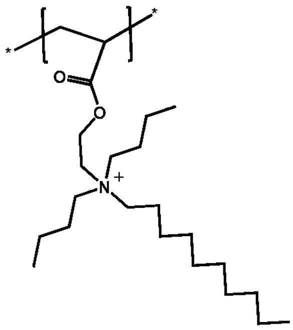 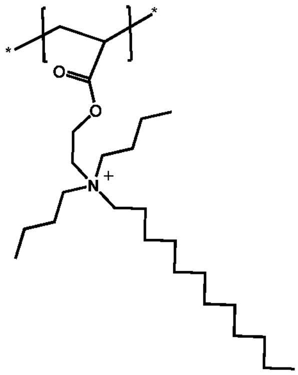

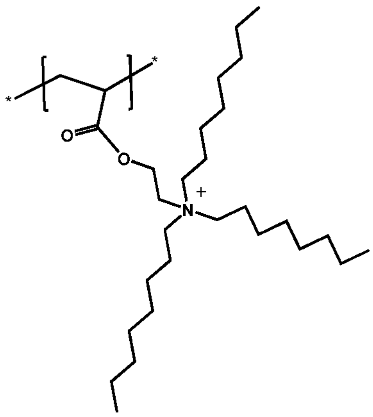 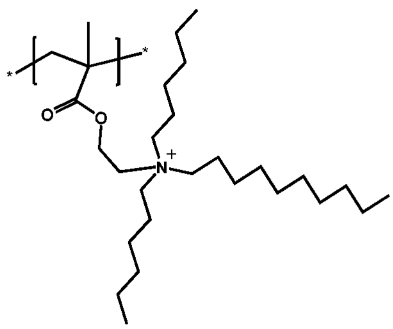

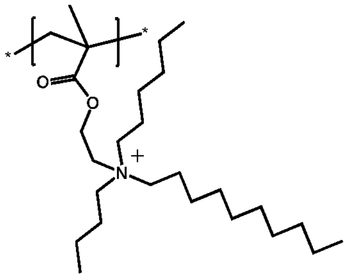 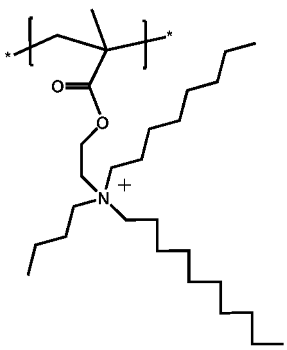 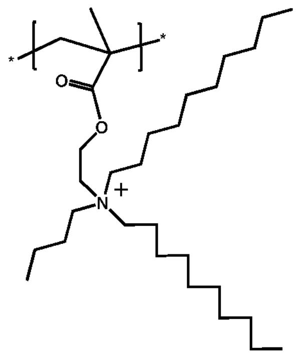

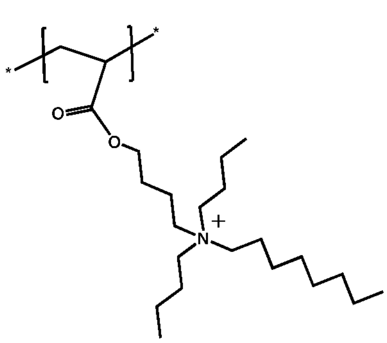 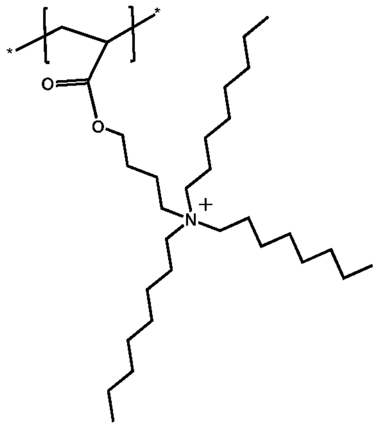

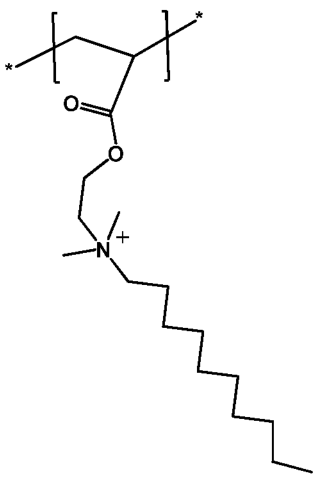 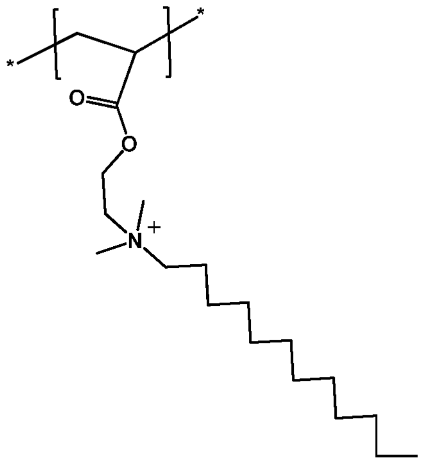

In the structure, * is an attachment point in the antibacterial resin.

In an exemplary embodiment of the present specification, the copolymer includes 1 to 50,000 of the second repeating units. Specifically, the copolymer includes 2 to 40,000, 5 to 30,000, 10 to 10,000, or 20 to 5,000 of the second repeating units.

According to an exemplary embodiment of the present specification, since the monomer represented by Chemical Formula 1 exhibits cationic properties, the monomer may be present in a form where a salt is formed along with a group exhibiting anionic properties. Furthermore, since the second repeating unit derived from the monomer represented by Chemical Formula 1 exhibits cationic properties, the second repeating unit may be present in a form where a salt is formed along with a group exhibiting anionic properties. In this case, the group exhibiting anionic properties is not particularly limited, and materials known in the art may be used as long as the materials do not impair the purpose of the antibacterial properties. For example, the group exhibiting anionic properties may be a halogen-based anion, a sulfonate-based anion, a salicylate-based anion, a benzoate-based anion, a citrate-based anion, a tetrafluoroborate-based anion, a sorbate-based anion, or a lactate-based anion.

Specifically, the group exhibiting anionic properties may be $Br^-$, $Cl^-$, $I^-$, $F^-$, $BF_4^-$, $OH^-$, $CF_3COO^-$, $CF_3SO_3^-$ $NO_3^-$, $SH^-$,

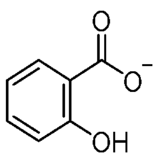 , 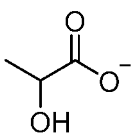 , 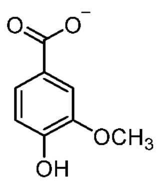 , 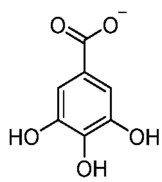 ,

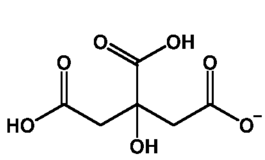, 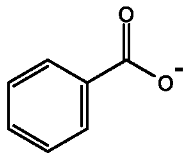, or 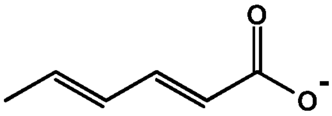,

but is not limited thereto.

According to an exemplary embodiment of the present specification, the second repeating unit is a unit exhibiting antibacterial properties. That is, the antibacterial resin may exhibit antibacterial properties due to the second repeating unit. Specifically, the antibacterial properties of the antibacterial resin are derived from the above-described anionic functional group and cationic functional group included in the antibacterial resin. In general, cell walls of bacteria and the like are often negatively charged, and the cationic functional group may perform a destructive action on the cell walls.

According to an exemplary embodiment of the present specification, the first repeating unit derived from the propylene is represented by the following Chemical Formula 2.

[Chemical Formula 2]

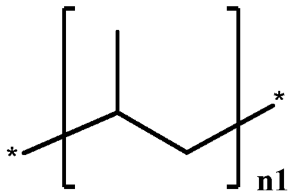

In Chemical Formula 2,

n1 is an integer from 1 to 50,000, and
* is an attachment point in the antibacterial resin.

According to an exemplary embodiment of the present specification, n1 is an integer from 2 to 40,000, an integer from 5 to 30,000, or an integer from 10 to 10,000.

According to an exemplary embodiment of the present specification, hydrogen included in the first repeating unit is desorbed and the first repeating unit is bonded to the second repeating unit, or the * moiety is bonded to the second repeating unit.

According to an exemplary embodiment of the present specification, the first repeating unit derived from the propylene monomer may be polypropylene.

According to an exemplary embodiment of the present specification, the first repeating unit and the second repeating unit are graft-polymerized. That is, an exemplary embodiment of the present specification provides an antibacterial resin including a polymer in which the first repeating unit and the second repeating unit are grafted. Specifically, an exemplary embodiment of the present specification provides an antibacterial resin including: a first repeating unit derived from propylene; and a second repeating unit derived from the monomer represented by Chemical Formula 1 and grafted to the first repeating unit. When the first repeating unit and the second repeating unit are graft-polymerized as described above, the antibacterial material is not included as a separate material but is polymerized as a monomer, so there is an advantage in that stability against the human body is excellent and antibacterial persistence is maintained.

According to an exemplary embodiment of the present specification, the antibacterial resin includes a third repeating unit represented by the following Chemical Formula 3.

[Chemical Formula 3]

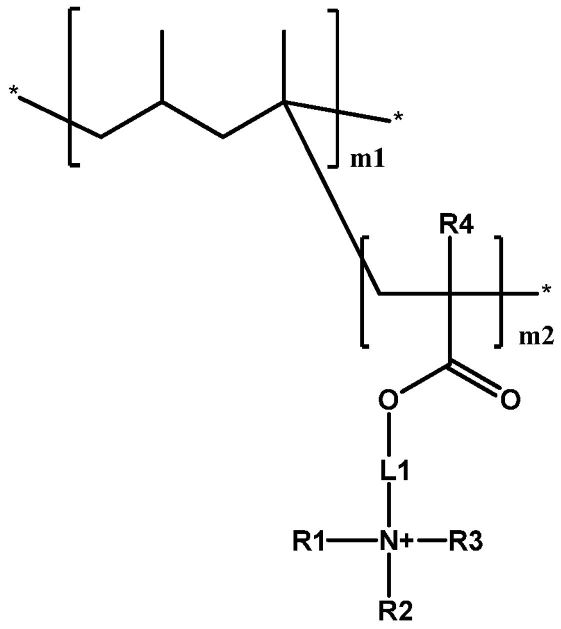

In Chemical Formula 3,

m1 and m2 are each an integer from 1 to 50,000,
L1 is an alkylene group,
R1 to R3 are the same as or different from each other, and are each independently an alkyl group,
R4 is hydrogen or an alkyl group, and
* is an attachment point in the antibacterial resin.

According to an exemplary embodiment of the present specification, m1 and m2 are each an integer from 2 to 40,000, an integer from 5 to 30,000, or an integer from 10 to 10,000.

According to an exemplary embodiment of the present specification, the third repeating unit represented by Chemical Formula 3 is a unit in which the first repeating unit and the second repeating unit are grafted.

According to an exemplary embodiment of the present specification, the antibacterial resin is composed of the third repeating unit represented by Chemical Formula 3.

According to an exemplary embodiment of the present specification, in the grafted polymer, the first repeating unit is the main chain, and the second repeating unit may be grafted to the main chain in the form of side chains.

In the present specification, having antibacterial properties means that the antibacterial activity measured based on the following Method 1, in other words, the bacteriostatic reduction rate is 99% or more. The antibacterial activity may be 99% or more or 99.8% or more in other examples. The upper limit of the antibacterial activity is not particularly limited, and for example, the bacteriostatic reduction rate may be 100% or less or less than 100%.

According to an exemplary embodiment of the present specification, a specific method for measuring the antibacterial activity, that is, the bacteriostatic reduction rate is as in Method 1 to be described below.

According to an exemplary embodiment of the present specification, the antibacterial resin has an antibacterial activity of 99% or more against any one bacterial strain selected from the group consisting of Gram-positive bacteria, Gram-negative bacteria, and molds, as measured by the following Method 1.

[Method 1]

A strain is diluted in a 1X PBS solution at a concentration of 1.6 x $10^5$ CFU/mL. An antibacterial resin and a bacterial solution are put into a 50 mL conical tube (ratio = 0.1 g/5 mL) and the resulting mixture is stirred at 37°C in a shaking incubator for 1 hour to bring the antibacterial resin and the bacterial solution into contact. This solution is diluted and spread onto an agar medium plate. Serial dilution is performed to enable colony counting, and 1X PBS is used in this process. Bacteriostatic performance is calculated using the following equations after calculating the initial concentration of microorganisms ($C_{Reference}$, CFU/mL) in consideration of the dilution concentration.

$$\text{Antibacterial activity}(\%) = (1 - C_{sample}/C_{Reference}) \times 100$$

$C_{sample}$ = Initial concentration of microorganisms of antibacterial resin containing bacteriostatic material
$C_{Reference}$ = Initial concentration of microorganisms of polypropylene containing no bacteriostatic material

When the antibacterial activity of the antibacterial resin according to the present invention was evaluated using Method 1, only the case where the antibacterial activity was 99% or more was observed. As a result, it could be confirmed that the antibacterial resin according to the present invention has excellent antibacterial activity.

As used herein, the term Gram-positive bacteria is a general term for bacteria that are stained purple when stained using the Gram staining method, and Gram-positive bacteria exhibit a purple color without discoloration even though the Gram-positive bacteria are stained with a basic dye such as crystal violet and then treated with ethanol because the cell walls of Gram-positive bacteria are composed of several layers of peptidoglycan.

According to an exemplary embodiment of the present specification, the Gram-positive bacteria are selected from *Enterococcus faecalis, Staphylococcus aureus, Streptococcus pneumoniae, Enterococcus faecium* and *Lactobacillus lactis.* Specifically, the Gram-positive bacteria are any one selected from the above-described examples, but are not limited thereto.

As used herein, the term Gram-negative bacteria are a general term for bacteria that are stained red when stained with the Gram staining method, and Gram-negative bacteria have an outer membrane composed of lipid polysaccharides, lipid proteins, and/or other complex polymeric materials instead of having a cell wall with a relatively small amount of peptidoglycan compared to Gram-positive bacteria.

According to an exemplary embodiment of the present specification, the Gram-negative bacteria are selected from *Proteus mirabilis, Escherichia coli, Salmonella typhi, Pseudomonas aeruginosa* and *Vibrio cholerae.* Specifically, the Gram-negative bacteria are any one selected from the above-described examples, but are not limited thereto. According to an exemplary embodiment of the present specification, the mold, that is, the mold fungus may be *Candida albicans,* and the like, but is not limited thereto.

In the antibacterial resin having antibacterial activity, since the strains of the Gram-positive bacteria, Gram-negative bacteria and molds may not only induce various diseases upon contact, but also cause secondary infections, it is preferred to exhibit antibacterial properties against all of the Gram-positive bacteria, Gram-negative bacteria, and molds using one antibacterial agent.

According to an exemplary embodiment of the present specification, the antibacterial resin has an antibacterial activity of 99% or more against Gram-positive bacteria as measured by Method 1.

According to an exemplary embodiment of the present specification, the antibacterial resin has an antibacterial activity of 99% or more against Gram-negative bacteria as measured by Method 1.

According to an exemplary embodiment of the present specification, the antibacterial resin has an antibacterial activity of 99% or more against molds as measured by Method 1.

In Method 1, containing a bacteriostatic material may mean including a second repeating unit.

According to an exemplary embodiment of the present specification, the antibacterial resin has a weight average molecular weight (Mw) of 10,000 g/mol to 1,000,000 g/mol. When the antibacterial resin has a weight average molecular weight of less than 10,000 g/mol, the antibacterial resin is present in the form of a monomer rather than a polymer, and thus may be easily eluted, and a problem in that the antibacterial resin is absorbed into the human body due to its low molecular weight may occur. Furthermore, when the antibacterial resin has a weight average molecular weight of more than 1,000,000 g/mol, the molecular weight becomes so large that due to the high viscosity thereof, it may be impossible to apply the antibacterial resin or the antibacterial resin may not be dissolved in water. More preferably, the antibacterial resin has a weight average molecular weight (Mw: g/mol) of 15,000 g/mol or more, 20,000 g/mol or more, 30,000 g/mol or more, or 40,000 g/mol or more and 500,000 g/mol or less, 400,000 g/mol or less, 300,000 g/mol or less, 200,000 g/mol or less, or 150,000 g/mol or less.

According to an exemplary embodiment of the present specification, the antibacterial resin has a number average molecular weight (Mn) of 20,000 g/mol to 200,000 g/mol. More preferably, the antibacterial resin has a number average molecular weight of 25,000 g/mol or more, 30,000 g/mol or more, 35,000 g/mol or more, or 40,000 g/mol or more, or 150,000 g/mol or less, 100,000 g/mol or less, 90,000 g/mol or less, and 80,000 g/mol or less.

According to an exemplary embodiment of the present specification, the weight average molecular weight and the number average molecular weight may be measured through high temperature gel permeation chromatography (GPC). The high temperature GPC can be used without any limitation as long as it is a method used in the art.

According to an exemplary embodiment of the present specification, the antibacterial resin may have a molecular weight distribution (Mw/Mn) within a range of 1 to 3. The molecular weight distribution is 1.1 or more, 1.2 or more, 1.3 or more, or 1.4 or more, or 2.8 or less, 2.6 or less, 2.4 or less, 2.2 or less, 2.0 or less, 1.8 or less, or 1.6 or less in other examples.

In an exemplary embodiment of the present specification, the terminal group of the antibacterial resin is

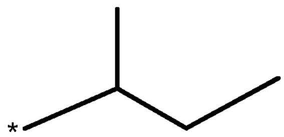 or 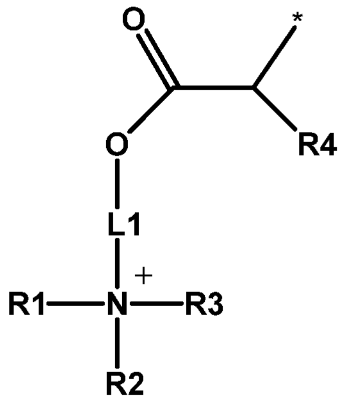 ,

L1 and R1 to R4 are the same as those defined in Chemical Formula 1, and ——* means a moiety linked to the main chain or side chain of the antibacterial resin.

An exemplary embodiment of the present specification provides a composition for forming the above-described antibacterial resin.

According to an exemplary embodiment of the present specification, the composition for forming an antibacterial resin includes polypropylene; a monomer represented by Chemical Formula 1; and an initiator.

According to an exemplary embodiment of the present specification, the polypropylene is included in an amount of 70 parts by weight to 99.5 parts by weight based on 100 parts by weight of the composition for forming an antibacterial resin. Specifically, the polypropylene is included in an amount of 80 parts by weight to 99.5 parts by weight, 90 parts by weight to 99.5 parts by weight, or 95 parts by weight to 99.5 parts by weight.

According to an exemplary embodiment of the present specification, the monomer represented by Chemical Formula 1 is included in an amount of 0.4 parts by weight to 20 parts by weight based on 100 parts by weight of the composition for forming an antibacterial resin. Specifically, the monomer represented by Chemical Formula 1 is included in an amount of 0.5 parts by weight to 15 parts by weight, 0.5 parts by weight to 10 parts by weight, or 0.5 parts by weight to 5 parts by weight. When the content of the monomer represented by Chemical Formula 1 satisfies the above range, there is an effect of exhibiting excellent antibacterial properties and antibacterial persistence.

According to an exemplary embodiment of the present specification, examples of the initiator include a peroxide-based compound such as dicumyl peroxide, dipentyl peroxide, di-3,5,5-trimethylhexanoyl peroxide or dilauryl peroxide; a peroxydicarbonate-based compound such as diisopropyl peroxydicarbonate, di-sec-butyl peroxydicarbonate or di-2-ethylhexyl peroxydicarbonate; a peroxyester-based compound such as t-butylperoxy pivalate, 1,1,3,3-tetramethylbutyl peroxyneodecanoate or t-butyl peroxyneodecanoate; an azo-based compound such as azobis-2,4-dimethylvaleronitrile; a hydroperoxide-based compound such as t-butyl hydroperoxide; or a sulfate-based compound such as potassium persulfate or ammonium persulfate; or the like, and any one thereof or a mixture of two or more thereof may be used, but the initiator is not limited to the examples.

According to a preferred exemplary embodiment of the present specification, the initiator is dicumyl peroxide (DCP) .

According to an exemplary embodiment of the present specification, the initiator is included in an amount of 0.01 parts by weight to 10 parts by weight based on 100 parts by weight of the composition for forming an antibacterial resin. Specifically, the initiator is included in an amount of 0.01 parts by weight to 4 parts by weight, 0.01 parts by weight to 3 parts by weight, 0.01 parts by weight to 2 parts by weight, 0.01 parts by weight to 1 part by weight, or 0.01 parts by weight to 0.5 parts by weight. In this case, when the content of the initiator is less than 0.01 parts by weight, the polymerization reaction time is prolonged and the polymerization conversion efficiency is reduced, so that there is a concern in that productivity deteriorates. Specifically, the polymerization conversion efficiency is decreased, so that there is a disadvantage in that a large amount of residual monomer and decomposition products are generated. In contrast, when the content exceeds 10 parts by weight, the initiator is not completely consumed during the polymerization process and remains in a polymer to be finally prepared, so that there is a concern in that the physical properties of the polymer, particularly, thermal stability, and the like deteriorate.

An exemplary embodiment of the present specification provides a molded article including the above-described antibacterial resin or prepared therefrom. The molded article may be specifically an automobile part, a blow molding molded article, an inflation molded article, a cast molded article, an extrusion laminate molded article, an extrusion molded article, a foam molded article, an injection molded article, a sheet, a film, a fiber, a monofilament, or a non-woven fabric, but is not limited to the examples. The automobile part may be an interior or exterior material for automobiles.

[Mode for Invention]

Hereinafter, the present invention will be described in detail with reference to Examples for specifically describing the present invention. However, the Examples according to the present invention may be modified into various different forms, and it should not be interpreted that the scope of the present specification is limited to the Examples to be described below. The Examples of the present specification are provided for more completely describing the present invention to those with ordinary skill in the art.

**<Preparation Example 1> Preparation of monomer represented by Chemical Formula 1**

**Preparation Example 1-1. Synthesis of Compound 1, Compound 2, and Compound 3**

Step 1.

(1) 0.1 mol of 2- (dibutylamino) ethanol (DBAE), 0.1 mol of trimethylamine and 0.001 mol of hydroquinone were added to 100 mL of THF (solvent).
(2) 0.1 mol of acryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromooctane (preparation of Compound 1), 1-bromodecane (preparation of Compound 2) or 1-bromododecane (preparation of Compound 3) were dissolved at 50 wt% in acrylonitrile (solvent) at a molar ratio of 1:1.
(2) Subsequently, p-methoxyphenol, which is a polymerization inhibitor, was added (ratio with reactants 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The resulting product was dried under vacuum at 45°C.

**Preparation Example 1-2. Synthesis of Compound 4**

Step 1

(1) 0.1 mol of 2-(dioctylamino)ethanol (DOAE), 0.1 mol of trimethylamine and 0.001 mol of hydroquinone were put into 100 mL of THF (solvent).
(2) 0.1 mol of acryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2

(1) The product of Step 1 and 1-bromooctane were dissolved at 50 wt% in acrylonitrile (solvent) at a molar ratio of 1:1.
(2) Subsequently, p-methoxyphenol, which is a polymerization inhibitor, was added (ratio with reactants 1:0.001 (eq)).
(3) The resulting mixture was reacted at 50°C for 20 hours.

(4) After static precipitation (MTBE:reaction solution = 15:1 (volume ratio)) in methyl t-butyl ether (MTBE), the mixture was filtered.
(5) The resulting product was dried under vacuum at 45°C.

**Preparation Example 1-3. Synthesis of Compound 5**

Step 1.

(1) 0.1 mol of 2-(dihexylamino)ethanol (DHAE), 0.1 mol of trimethylamine and 0.001 mol of hydroquinone were put into 100 mL of THF (solvent).
(2) 0.1 mol of methacryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromodecane were dissolved at 50 wt% in acrylonitrile (solvent) at a molar ratio of 1:1.
(2) Subsequently, p-methoxyphenol, which is a polymerization inhibitor, was added (ratio with reactants 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The resulting product was dried under vacuum at 45°C.

**Preparation Example 1-4. Synthesis of Compound 6**

Step 1.

(1) 0.1 mol of 2-(butylhexylamino)ethanol (BHAE), 0.1 mol of trimethylamine and 0.001 mol of hydroquinone were put into 100 mL of THF (solvent).
(2) 0.1 mol of methacryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromodecane were dissolved at 50 wt% in acrylonitrile (solvent) at a molar ratio of 1:1.
(2) Subsequently, p-methoxyphenol, which is a polymerization inhibitor, was added (ratio with reactants 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The resulting product was dried under vacuum at 45°C.

**Preparation Example 1-5. Synthesis of Compound 7**

Step 1.

(1) 0.1 mol of 2-(butyloctylamino)ethanol (BOAE), 0.1 mol of trimethylamine and 0.001 mol of hydroquinone were put into 100 mL of THF (solvent).
(2) 0.1 mol of methacryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromodecane were dissolved at 50 wt% in acrylonitrile (solvent) at a molar ratio of 1:1.
(2) Subsequently, p-methoxyphenol, which is a polymerization inhibitor, was added (ratio with reactants 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The resulting product was dried under vacuum at 45°C.

**Preparation Example 1-6. Synthesis of Compound 8**

Step 1.

(1) 0.1 mol of 2-(butyldecylamino)ethanol (BOAE), 0.1 mol of trimethylamine and 0.001 mol of hydroquinone were put into 100 mL of THF (solvent).
(2) 0.1 mol of methacryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromodecane were dissolved at 50 wt% in acrylonitrile (solvent) at a molar ratio of 1:1.
(2) Subsequently, p-methoxyphenol, which is a polymerization inhibitor, was added (ratio with reactants 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The resulting product was dried under vacuum at 45°C.

**Preparation Example 1-7. Synthesis of Compound 9**

Step 1.

(1) 0.1 mol of 2-(dibutylamino)butanol (DBAB), 0.1 mol of trimethylamine and 0.001 mol of hydroquinone were put into 100 mL of THF (solvent).

(2) 0.1 mol of acryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromooctane were dissolved at 50 wt% in acrylonitrile (solvent) at a molar ratio of 1:1.
(2) Subsequently, p-methoxyphenol, which is a polymerization inhibitor, was added (ratio with reactants 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The resulting product was dried under vacuum at 45°C.

**Preparation Example 1-8. Synthesis of Compound 10**

Step 1.

(1) 0.1 mol of 2-(dioctylamino)butanol (DOAB), 0.1 mol of trimethylamine and 0.001 mol of hydroquinone were put into 100 mL of THF (solvent).
(2) 0.1 mol of acryloyl chloride was added dropwise onto a reaction solution while stirring the materials (room temperature).
(3) The resulting mixture was stirred for 2 hours.
(4) After a triethylamine salt was removed by filtering the mixture, the solvent was removed by a rotary evaporator.
(5) The residue was dried under vacuum at 83°C to 87°C.

Step 2.

(1) The product of Step 1 and 1-bromooctane were dissolved at 50 wt% in acrylonitrile (solvent) at a molar ratio of 1:1.
(2) Subsequently, p-methoxyphenol, which is a polymerization inhibitor, was added (ratio with reactants 1:0.001 (eq)).
(3) The resulting mixture was reacted at 50°C for 20 hours.
(4) After static precipitation (MTBE:reaction solution = 15:1 (volume ratio)) in methyl t-butyl ether (MTBE), the mixture was filtered.
(5) The resulting product was dried under vacuum at 45°C.

**Preparation Example 1-9. Synthesis of Compound 11**

(1) Acetonitrile (30 mL) was put into a two-neck round bottom flask (RBF), and 7.86 g of 2-(dimethylamino)ethyl methacrylate (0.05 mol), 11.1 g of bromodecane (0.05 mol), and 4-methoxyphenol (4 mg) were added thereto.
(2) The resulting mixture was reacted under stirring at 45°C for 16 hours.
(3) After static precipitation (MTBE:reaction solution = 15:1) in methyl t-butyl ether (MTBE), the mixture was filtered.

**Preparation Example 1-10. Synthesis of Compound 12**

Compound 12 was prepared in the same manner as in the preparation method of Preparation Example 1-9, except that bromododecane was used instead of bromodecane in Preparation Example 1-9.

Although a static precipitation method of adding a reactant to a nonsolvent was used in Preparation Examples 1-1 to 1-10, a reverse precipitation method of adding a nonsolvent to a reactant may also be used. Furthermore, in addition to 15:1, other ratios of MTBE and reaction solution may be used, and for example, 12:1 and 26:1 may be used.

The structures of Compounds 1 to 12 prepared in Preparation Examples 1-1 to 1-10 above are as follows.

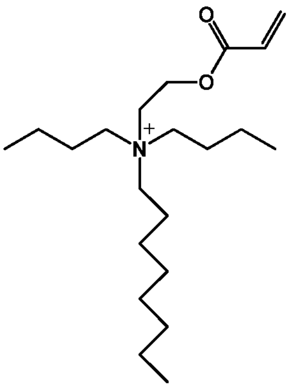

Compound 1

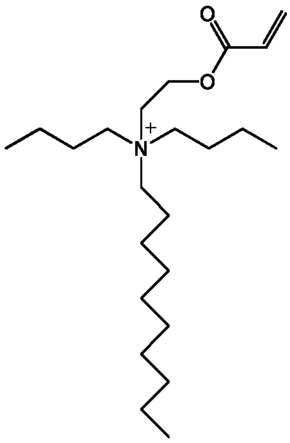

Compound 2

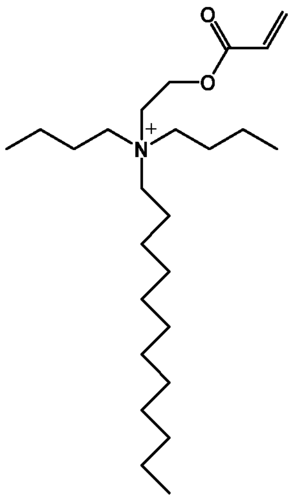

Compound 3

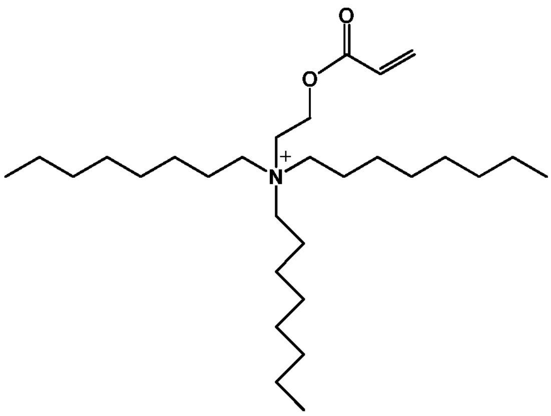

Compound 4

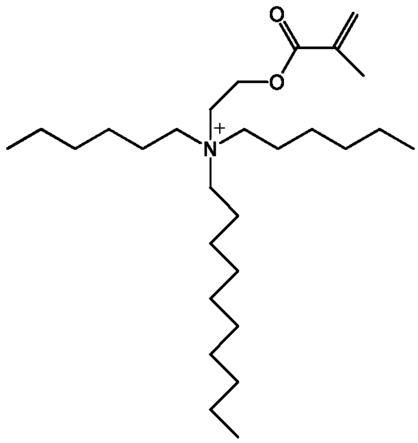

Compound 5

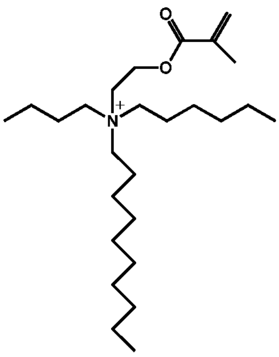

Compound 6

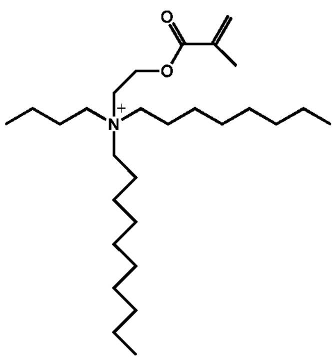

Compound 7

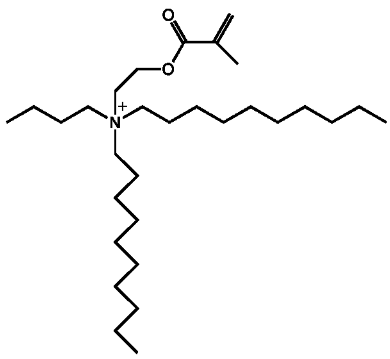

Compound 8

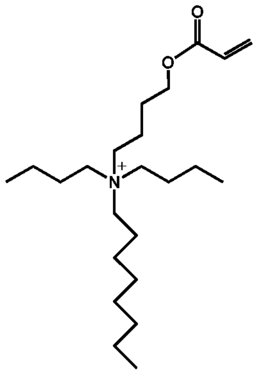

Compound 9

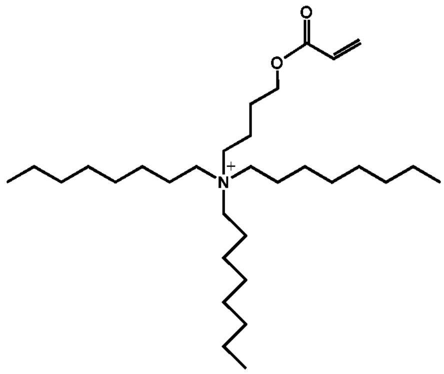

Compound 10

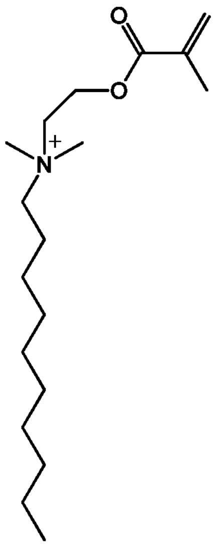

Compound 11

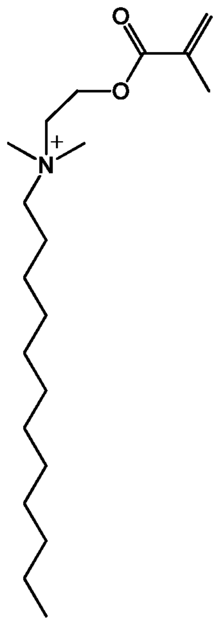

Compound 12

**<Preparation Example 2> Preparation of antibacterial resin**

**Preparation Example 2-1.**

When the internal temperature of an internal mixer reached 160°C, polypropylene (PP, LG Chem, MH1700) was added and melted. After 5 minutes, Compound 1 (1 wt% of PP) prepared in Preparation Example 1 and DCP (0.1 wt% of total) as an initiator were added thereto and a graft reaction was performed under stirring for 30 minutes. After the reaction was completed, the internal mixer was disassembled to obtain a bulk sample. The bulk sample was crushed and pulverized into a powder, and then washed ($H_2O$, 50°C, 24 hours) to remove unreacted monomers, and dried to obtain Sample 1.

**Preparation Examples 2-2 to 2-12.**

Samples 2 to 12 were secured in the same manner as in Preparation Example 2-1, except that compounds shown in the following Table 1 were used instead of Compound 1 in Preparation Example 2-1.

[Table 1]

| Sample No. | Compound used during preparation of sample |
|---|---|
| Sample 1 | Compound 1 |

(continued)

| Sample No. | Compound used during preparation of sample |
|---|---|
| Sample 2 | Compound 2 |
| Sample 3 | Compound 3 |
| Sample 4 | Compound 4 |
| Sample 5 | Compound 5 |
| Sample 6 | Compound 6 |
| Sample 7 | Compound 7 |
| Sample 8 | Compound 8 |
| Sample 9 | Compound 9 |
| Sample 10 | Compound 10 |
| Sample 11 | Compound 11 |
| Sample 12 | Compound 12 |

**Preparation Example 2-13.**

Sample 13 was prepared in the same manner as in Preparation Example 2-1, except that Compound 11 (5 wt% of PP) and DCP (0.5 wt% of total) were used instead of Compound 1 (1 wt% of PP) and DCP(0.1 wt% of total), respectively, in Preparation Example 2-1.

**Preparation Example 2-14.**

Sample 14 was prepared in the same manner as in Preparation Example 2-1, except that Compound 11 (0.3 wt% of PP) and DCP (0.01 wt% of total) were used instead of Compound 1 (1 wt% of PP) and DCP (0.1 wt% of total), respectively, in Preparation Example 2-1.

It was confirmed that Samples 1 to 14 above were prepared by measuring $^1$H NMR. Specifically, the NMR measurement method is as follows.

- Experimental device: Bruker 600MHz NMR
- Solvent: 1,1,2,2-tetrachloroethane-d2 (TCE-d2)
- Experimental temperature: 120°C
- Sample pretreatment: 10 mg of a sample is put into a vial at room temperature, 0.7 mL of TCE-d2 is added thereto, and the sample is completely dissolved using a heat gun. Then, the sample is transferred to an NMR tube and sampled.

FIG. 1 and Table 2 show the $^1$H NMR measurement results of Samples 11, 13, and 14.

In FIG. 1, (a) shows the $^1$H NMR measurement results of Sample 13, (b) shows the $^1$H NMR measurement results of Sample 11, and (c) shows the $^1$H NMR measurement results of Sample 14.

[Table 2]

| Sample No. | Weight ratio | | |
|---|---|---|---|
| | First repeating unit (PP) | Second repeating unit (Derived from Chemical Formula 1) | Residual monomer |
| Sample 11 | 99.12 | 0.88 | - |
| Sample 13 | 95.54 | 4.46 | - |
| Sample 14 | 99.68 | 0.32 | - |

From Table 2 and FIG. 1, it can be confirmed that an antibacterial resin including a first repeating unit derived from propylene and a second repeating unit derived from a monomer represented by Chemical Formula 1 was produced.

**Preparation Example 2-15.**

1 wt % of Compound 11 prepared in Preparation Example 1-9 was put into PP (LG Chem, MH1700) and simply mixed. The mixture was washed ($H_2O$, 50°C, and 24 hours) and then dried to secure Sample 15.

**Preparation Example 2-16.**

1 wt % of Compound 12 prepared in Preparation Example 1-10 was put into PP (LG Chem, MH1700) and simply mixed. The mixture was washed ($H_2O$, 50°C, and 24 hours) and then dried to secure Sample 16.

**<Examples> Measurement of antibacterial activity Example 1.**

An *E. coli* ATCC 25922 standard strain is diluted in a 1X PBS solution at a concentration of 1.6 x $10^5$ CFU/mL. Sample 1 and a bacterial solution are put into a 50 mL conical tube (ratio = 0.1 g/5 mL) and the resulting mixture is stirred at 37°C in a shaking incubator for 1 hour to bring Sample 1 and the bacterial solution into contact. This solution is diluted and spread onto an agar medium plate. Serial dilution is performed to enable colony counting, and 1X PBS is used in this process. Antibacterial activity is calculated using the following equations after calculating the initial concentration of microorganisms ($C_{Reference}$, CFU/mL) in consideration of the dilution concentration.

$$\text{Antibacterial activity}(\%) = (1-C_{sample}/C_{Reference}) \times 100$$

$C_{sample}$ = Initial concentration of microorganisms of antibacterial resin containing bacteriostatic material
$C_{Reference}$ = Initial concentration of microorganisms of polypropylene containing no bacteriostatic material

**Examples 2 to 12.**

Antibacterial activity was measured in the same manner as in the preparation method of Example 1, except that samples in the following Table 3 were used instead of Sample 1 in Example 1.

**Comparative Examples 1 to 3**

Antibacterial activity was measured in the same manner as in the preparation method of Example 1, except that samples in the following Table 3 were used instead of Sample 1 in Example 1.

**Comparative Example 4.**

Antibacterial activity was measured using PP (LG Chem, MH1700) instead of Sample 1 in Example 1.
The antibacterial activity calculated in Examples 1 to 12 and Comparative Examples 1 to 4 is shown in the following Table 3.
In the following Table 3, the control is a bacteria inoculation culture solution to which no sample has been added, and is a measure of whether the bacteria have grown properly. In Examples 1 to 12 and Comparative Examples 1 to 4, experiments were performed after confirming the reliability of the experiment through the controls in the following Table 3.

[Table 3]

| Sample No. | Sample used | CFU/ml | logCFU/ml | Antibacterial activity (%) |
|---|---|---|---|---|
| Control | - | 1.70E+04 | 4.23 | - |
| Example 2 | Sample 2 | 0 | 0.00 | >99.99 |
| Example 3 | Sample 3 | 0 | 0.00 | >99.99 |
| Example 4 | Sample 4 | 0 | 0.00 | >99.99 |
| Example 5 | Sample 5 | 0 | 0.00 | >99.99 |
| Example 6 | Sample 6 | 0 | 0.00 | >99.99 |
| Example 7 | Sample 7 | 0 | 0.00 | >99.99 |

(continued)

| Sample No. | Sample used | CFU/ml | logCFU/ml | Antibacterial activity (%) |
|---|---|---|---|---|
| Example 8 | Sample 8 | 0 | 0.00 | >99.99 |
| Example 10 | Sample 10 | 0 | 0.00 | >99.99 |
| Example 11 | Sample 11 | 0 | 0.00 | >99.99 |
| Example 12 | Sample 12 | 0 | 0.00 | >99.99 |
| Comparative Example 1 | Sample 15 | 3.25E+04 | 4.51 | 0 |
| Comparative Example 2 | Sample 16 | 3.18E+04 | 4.50 | 2.8 |
| Comparative Example 3 | Sample 14 | 4.60E+0.2 | 2.66 | 98.0 |
| Comparative Example 4 | PP | 3.27E+04 | 4.51 | 0 |

Through Table 3, it can be confirmed that when only polypropylene is included (Comparative Example 4) and when polypropylene is simply blended with the monomer (antibacterial monomer) represented by Chemical Formula 1 (Comparative Examples 1 and 2), the antibacterial monomer is washed with water during the process of preparing a sample, resulting in a low antibacterial activity of 5% or less. From this, it can be confirmed that when polypropylene is simply blended with an antibacterial monomer, the antibacterial monomer may be separated by a physical method such as washing even though the antibacterial monomer is added, and may be released and removed, so that no sustained antibacterial activity is exhibited as in the case where only the polypropylene is included (Comparative Example 4).

In addition, it was confirmed that when the content of an antibacterial monomer in a PP resin was 0.3 wt% (Comparative Example 3) and when the weight ratio of a repeating unit derived from a propylene monomer (a first repeating unit) to a repeating unit derived from the antibacterial monomer (a second repeating unit, the antibacterial monomer is represented by Chemical Formula 1) was out of a range of 1:0.005 or more, the antibacterial activity was 980, leading to a significant reduction.

In contrast, it can be confirmed that the antibacterial resin according to an exemplary embodiment of the present specification (Example group) is not separated by physical methods, and exhibits 990 or more antibacterial activity without any risk of release because a polymer in which a repeating unit derived from a propylene monomer (a first repeating unit) and a repeating unit derived from an antibacterial monomer (a second repeating unit) are grafted is used.

It can be confirmed that in particular, in the chemical formula of the antibacterial monomer, when two or more of R1 to R3 are an alkyl group having 6 or more carbon atoms (Examples 4, 5, 7, 8, and 10) or the difference in the number of carbon atoms between an alkyl group having the largest number of carbon atoms and an alkyl group having the smallest number of carbon atoms among R1 to R3 is 5 or more (that is, when the structure of the antibacterial monomer is highly asymmetric) (Examples 2, 3, 6, 11, and 12), the antibacterial activity is 99.99 % or more, which is excellent. Furthermore, it was confirmed that the antibacterial resin according to the present specification has an antibacterial activity of 99% or more because the weight ratio of the first repeating unit to the second repeating unit is within a range of 1:0.005 or more.

## Claims

**1.** An antibacterial resin comprising:

a first repeating unit derived from propylene; and
a second repeating unit derived from a monomer represented by the following Chemical Formula 1,
wherein a weight ratio of the first repeating unit to the second repeating unit is 1:(0.005 or more):

[Chemical Formula 1]

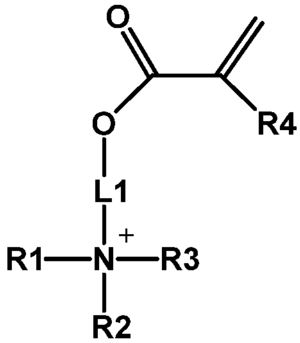

in Chemical Formula 1,
L1 is an alkylene group,
R1 to R3 are the same as or different from each other, and are each independently an alkyl group, and
R4 is hydrogen or an alkyl group.

2. The antibacterial resin of claim 1, wherein the first repeating unit and the second repeating unit are graft-polymerized.

3. The antibacterial resin of claim 1, wherein a weight ratio of the first repeating unit to the second repeating unit is 1:0.005 to 1:0.5.

4. The antibacterial resin of claim 1, wherein the monomer represented by Chemical Formula 1 is any one of the following structures:

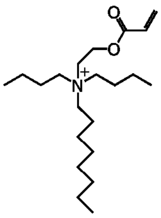
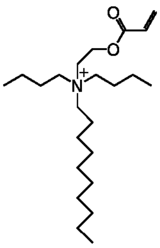
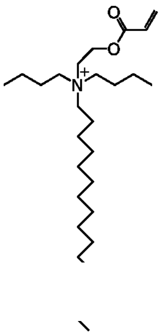
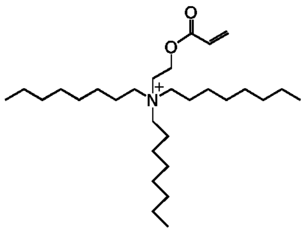
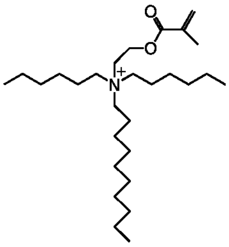
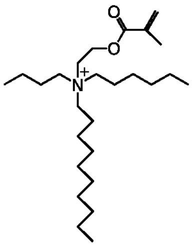
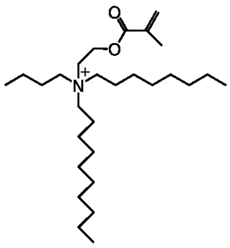
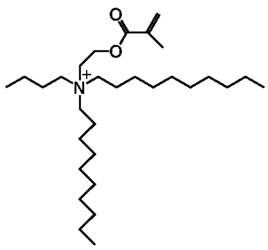
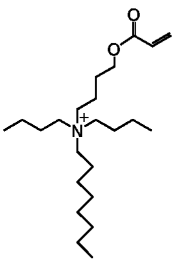
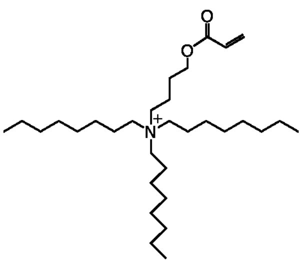
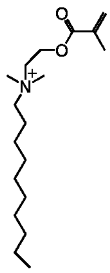
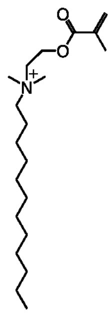

**5.** The antibacterial resin of claim 1, wherein the first repeating unit is represented by the following Chemical Formula 2:

[Chemical Formula 2]

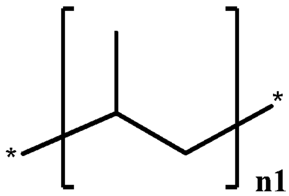

in Chemical Formula 2,

n1 is an integer from 1 to 50,000, and
* is an attachment point in the antibacterial resin.

**6.** The antibacterial resin of claim 1, wherein the antibacterial resin comprises a third repeating unit represented by the following Chemical Formula 3:

[Chemical Formula 3]

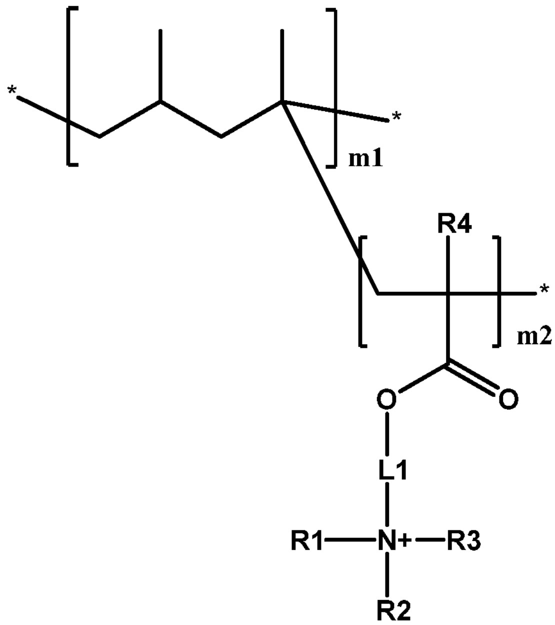

in Chemical Formula 3,

m1 and m2 are each an integer from 1 to 50,000,
L1 is an alkylene group,
R1 to R3 are the same as or different from each other, and are each independently an alkyl group,
R4 is hydrogen or an alkyl group, and
* is an attachment point in the antibacterial resin.

**7.** The antibacterial resin of claim 1, wherein the antibacterial resin has a weight average molecular weight of 10,000 g/mol to 1,000,000 g/mol.

**8.** The antibacterial resin of claim 1, wherein an antibacterial activity against any one strain selected from the group consisting of Gram-positive bacteria, Gram-negative bacteria, and molds, as measured by the following Method 1, is 990 or more:
[Method 1]

A strain is diluted in a 1X PBS solution at a concentration of $1.6 \times 10^5$ CFU/mL, an antibacterial resin and a bacterial solution are put into a 50 mL conical tube at a ratio of 0.1 g/5 mL and the resulting mixture is stirred at 37°C in a shaking incubator for 1 hour to bring the antibacterial resin and the bacterial solution into contact, this solution is diluted and spread onto an agar medium plate, serial dilution is performed to enable colony counting, and 1X PBS is used in this process, antibacterial activity is calculated using the following equations after calculating the initial concentration of microorganisms $C_{Reference}$ in CFU/mL in consideration of the dilution concentration.

$$\text{Antibacterial activity} = (1 - C_{sample}/C_{Reference}) \times 100\%$$

$C_{Sample}$ = Initial concentration of microorganisms of antibacterial resin containing bacteriostatic material
$C_{Reference}$ = Initial concentration of microorganisms of polypropylene containing no bacteriostatic material

**9.** The antibacterial resin of claim 8, where the Gram-positive bacteria are selected from *Enterococcus faecalis, Staphylococcus aureus, Streptococcus pneumoniae, Enterococcus faecium* and *Lactobacillus lactis.*

**10.** The antibacterial resin of claim 8, wherein the Gram-negative bacteria are selected from *Proteus mirabilis, Escherichia coli, Salmonella typhi, Pseudomonas aeruginosa* and *Vibrio cholerae.*

**11.** A composition for forming the antibacterial resin according to any one of claims 1 to 10.

**12.** The composition of claim 11, wherein the composition for forming the antibacterial resin comprises: polypropylene; the monomer represented by Chemical Formula 1; and an initiator.

**13.** A molded article comprising the antibacterial resin according to any one of claims 1 to 10 or prepared therefrom.

[Figure 1]

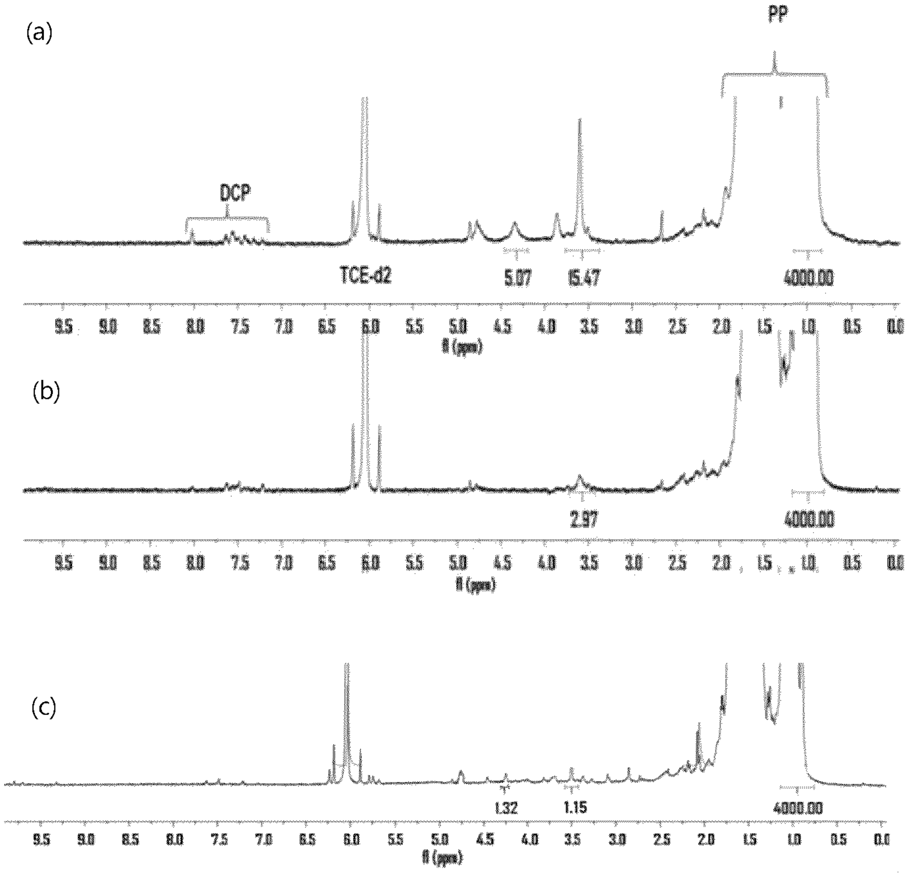
(a)
PP
DCP
TCE-d2
5.07
15.47
4000.00
9.5 9.0 8.5 8.0 7.5 7.0 6.5 6.0 5.5 5.0 4.5 4.0 3.5 3.0 2.5 2.0 1.5 1.0 0.5 0.0
f1 (ppm)
(b)
2.97
4000.00
9.5 9.0 8.5 8.0 7.5 7.0 6.5 6.0 5.5 5.0 4.5 4.0 3.5 3.0 2.5 2.0 1.5 1.0 0.5 0.0
f1 (ppm)
(c)
1.32
1.15
4000.00
9.5 9.0 8.5 8.0 7.5 7.0 6.5 6.0 5.5 5.0 4.5 4.0 3.5 3.0 2.5 2.0 1.5 1.0 0.5 0.0
f1 (ppm)

**INTERNATIONAL SEARCH REPORT**

International application No. **PCT/KR2023/015818**

**A. CLASSIFICATION OF SUBJECT MATTER**

**C08F 255/02**(2006.01)i; **C08F 220/34**(2006.01)i; **C08F 210/06**(2006.01)i; **C08L 51/06**(2006.01)i

According to International Patent Classification (IPC) or to both national classification and IPC

**B. FIELDS SEARCHED**

Minimum documentation searched (classification system followed by classification symbols)

C08F 255/02(2006.01); A01N 25/24(2006.01); B01D 39/16(2006.01); C08F 220/30(2006.01); C09D 5/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 항균수지(antibacterial resin), 폴리프로필렌(polypropylene), 4차암모늄(quaternary ammonium)

**C. DOCUMENTS CONSIDERED TO BE RELEVANT**

| Category* | Citation of document, with indication, where appropriate, of the relevant passages | Relevant to claim No. |
|---|---|---|
| Y | CN 115057968 A (CHAMBROAD CHEMICAL INDUSTRY RESEARCH INSTITUTE CO., LTD.) 16 September 2022 (2022-09-16)<br>See abstract; claim 6; paragraphs [0002]-[0028]; example 1; and figure 1. | 1-13 |
| Y | MOHAMMED, M. et al. Antibacterial Activity of Quaternary Ammonium Salt from Diethylaminoethyl Methacrylate. E-Journal of Chemistry. 2010, vol. 7, pp. S61-S66.<br>See abstract; page S65; and scheme 3. | 1-13 |
| Y | MANCUSO, R. et al. Synthesis and Antibacterial Activity of Polymerizable Acryloyloxyalkyltriethyl Ammonium Salts. ChemPlusChem. 2017, vol. 82, pp. 1235-1244.<br>See abstract; page 1236; and schemes 1-2. | 1-13 |
| A | KR 10-2018-0013063 A (MOKPO NATIONAL UNIVERSITY INDUSTRY-ACADEMIA COOPERATION GROUP et al.) 07 February 2018 (2018-02-07)<br>See entire document. | 1-13 |
| A | US 9918466 B2 (EMPIRE TECHNOLOGY DEVELOPMENT LLC) 20 March 2018 (2018-03-20)<br>See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 February 2024** | **02 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/015818**

| Patent document cited in search report | Publication date (day/month/year) | Patent family member(s) | Publication date (day/month/year) |
|---|---|---|---|
| CN 115057968 A | 16 September 2022 | None | |
| KR 10-2018-0013063 A | 07 February 2018 | KR 10-1856572 B1 | 10 May 2018 |
| US 9918466 B2 | 20 March 2018 | US 2015-0366188 A1 | 24 December 2015 |
| | | WO 2014-109765 A1 | 17 July 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220131742
- KR 1020230135730
- KR 1020090131847